# EUROPEAN PATENT APPLICATION

(11) **EP 2 508 077 A1**
(43) Date of publication of application: **10.10.2012**
(21) Application number: 09851891.3
(22) Date of filing: 16.12.2009
(51) Int. Cl.: A23D 9/02

(54) **FAT AND OIL COMPOSITION FOR CHOCOLATE AND CONFECTIONERY**

(30) Priority: 04.12.2009 KR 20090119845
(71) Applicant: CJ CheilJedang Corporation, Jung-gu Seoul 100-749 (KR)
(72) Inventor: KIM, Mi-Jung, Seongnam-si Gyeonggi-do 462-836 (KR); LEE, Sang-Bum, Seoul 152-070 (KR); LEE, Yun-Jeong, Incheon 402-201 (KR); PARK, Seung-Won, Yongin-si Gyeonggi-do 446-742 (KR); LEE, Kang-Pyo, Seoul 131-140 (KR)
(74) Representative: Bosch, Matthias
(86) International application number: PCT/KR2009/007540
(87) International publication number: WO 2011/068274

(57) **Abstract**

The present invention relates to a fat composition for chocolate and confectionery having a POS/SOS content ratio in triglyceride of 1 to 11, which is prepared by a process including preparing a raw material fat by mixing vegetable fat with fatty acid or a fatty acid derivative and enzymatically transesterifying the raw material fat. The fat composition according to the present invention has an SFC curve with a steep slope specific to cocoa butter due to a triglyceride composition with a high POS content similar to that of natural cocoa butter. Thus, the fat composition may be used as a cocoa butter equivalent that quickly melts in the mouth and has soft texture. Also, the fat composition may be used to enhance the quality of cocoa butter. The fat composition is added to solid cocoa butter, thereby achieving the composition and physical properties of triglyceride similar to those of cocoa butter having soft texture.

## Description

### [Technical Field]

The present invention relates to a fat composition for chocolate and confectionery, and more particularly, to a fat composition for chocolate and confectionery having a POS/SOS content ratio in a triglyceride of 1 to 11, which is prepared by a method including preparing a raw material fat by mixing vegetable fat with a fatty acid or fatty acid derivative; and enzymatically transesterifying the raw material fat.

### [Background Art]

### 1. Cocoa butter

Chocolate generally contains 50% or less of sugar, 30 to 50% of cocoa mass, and about 30% of fat including milk fat. The content of cocoa butter among chocolate fat varies according to the kind of chocolate, but is generally about 60%.

Cocoa butter (cacao butter) is fat obtained from the seed (cacao bean, fat content: 48 to 49%) of theobroma cacao fruit. Cocoa butter consists of 98% of triglyceride, 1% of free fatty acid, 0.5% of monoglyceride or diglyceride, 0.2% of sterol, and 150 to 250 ppm of tocopherol. Triglyceride of cocoa butter has a structure which is 75% or more symmetrical and in which oleic acid is located at the sn-2 position and palmitic acid and stearic acid are located at the sn-1 and sn-3 positions, respectively. Cocoa butter includes 34 to 49% of POS, 23 to 30% of SOS, and 13 to 17% of POP, which mainly form a symmetrical structure.

Cocoa butter has a melting point of 32 to 35°C and a solid fat content (SFC) of 71 to 88% at room temperature (about 20°C), starts melting at 30 to 32°C, and substantially melts at 32 to 35°C. Since cocoa butter rapidly melts at around 30°C, cocoa butter is solid at room temperature, whereas it quickly melts in the mouth and thus provides a refreshing and neat mouth-feel. It is known that such melting characteristics of cocoa butter are due to the symmetrical structure.

Cocoa butter has different compositions and contents of triglyceride depending on place of origin, which cause differences in properties, such as solidity, solidification speed, or the like. For example, as for compositions of symmetric fat having oleic acid in the sn-2 position, Malaysian cocoa butter has a POS content of 47% and an SOS content of 30%, while Brazilian cocoa butter has a POS content of 40% and an SOS content of 22% and Ghanaian cocoa butter has a POS content of 43% and an SOS content of 26%. These three cocoa butters have similar POP contents ranging from 13 to 15%. Regarding solidity, Malaysian cocoa butter is the solidest, Brazilian is the softest, and Ghanaian has a medium level of solidity. Further, solidification speed is different in the same order as solidity, which is 78 ± 10 minutes in Malaysian cocoa butter, 300 ± 51 minutes in Brazilian cocoa butter, and 95 ± 14 minutes Ghanaian cocoa butter.

### 2. Replacement fats for cocoa butter

Since cocoa butter is obtained from a natural plant, supply thereof changes according to weather changes. Further, since cocoa butter is expensive, vegetable fat and oil are used for chocolate as a substitute for cocoa butter. Such substitute fats include hardened palm kernel oil and coconut oil, which are not compatible with cocoa butter. Substitute fat and oil for cocoa butter is classified into a cocoa butter equivalent and extender (CBE), a cocoa butter replacer (CBR), and a cocoa butter substitute (CBS) depending on production methods and constituents.

The CBE is compatible with cocoa butter, has a similar triglyceride composition to cocoa butter, and requires tempering. Examples of the CBE include a palm middle fraction (PMF), Sal fat, Borneo tallow, Kokum butter, Shea butter, and fat fractions thereof. It is known that cocoa butter is mixed with a palm middle fraction and fat having a high SOS content to prepare fat similar to cocoa butter.

The CBR is solidified fat obtained by hardening soybean oil, canola oil, palm oil, or the like in a liquid state or in a liquid and solid mixed state at room temperature. The CBR can replace cocoa butter to a certain extent and does not require tempering. The CBR has a steep slope of an SFC curve and high oxidation stability due to increase in melting point and SFC. However, since the CBR is prepared using part hardening, it has a high content of trans acid and thus is nutritionally deficient.

The CBS is obtained by hardening some of vegetable oil and fat, is not compatible with cocoa butter, has a high content of lauric acid, and does not require tempering. The CBS is commonly used for coating in the baking field and is generally prepared by hardening or transesterifying palm kernel oil and coconut oil and, as necessary, mixing with other types of hardened vegetable oil. However, in the presence of moisture, fat and oil having a high content of lauric acid are hydrolyzed due to mold, emit abnormal odor, and are nutritionally deficient due to lauric acid.

Since CBR and CBS are nutritionally deficient and exhibit decreased functions associated with texture, e.g., they quickly melt in the mouth, the CBE is increasingly used. CBE is mostly prepared by mixing SOS rich fat synthesized via enzymatic esterification with palm mid-fraction (PMF) obtained by fractionation of palm oil at about 1:1. A CBE generally has a triglyceride composition consisting of 30 to 35% of POP, 10 to 15% of POS, and 30 to 35% of SOS, which has a higher content of POP and SOS and a lower content of POS than the triglyceride composition of Ghanaian cocoa butter (POP: 17%, POS: 43% SOS: 26%).

Physical properties of fat are identified through solid fat content (SFC) at different temperatures. SFC between 20 and 25°C denotes hardness of fat, SFC between 25 and 30°C denotes heat resistance, and SFC at 35°C or more denotes waxiness, which refers to an extent to which fat remains without quickly melting in the mouth. Cocoa butter or cocoa butter replacement fat used for chocolate is considered to have good quality when their SFC is high at 30°C or less, sharply decreases at 30°C or more, and is very low at 35°C or more, i.e. when SFC forms a steep curve.

Comparing the SFC of cocoa butter with that of the CBE, the CBE having a high SOS content has a lower SFC at 30°C or less than the cocoa butter. However, the CBE having a high SOS content has a higher SFC at 30°C or more than cocoa butter, and thus has a solid feel and leaves a substantial aftertaste in the mouth. As described above, difference in SFC between the cocoa butter and the CBE, i.e. property difference, is due to difference in triglyceride composition between the cocoa butter and the CBE. The CBE has a high content of POP and SOS, whereas the cocoa butte has a high POS content. POS and POP have melting points around 35°C, while SOS has a melting point of 41°C. Fat having a high SOS content is relatively hard at 30°C or more (Aleksandra Torbica et al., Eur. Food Res Technol., 2006, 222:385-391).

Recently, there is a trend toward chocolate which is soft rather than hard and quickly melts in the mouth without leaving an aftertaste. Accordingly, a soft CBE which has decreased SOS content and increased PMF content has been developed. The soft CBE has a triglyceride composition including 40 to 45% of POP, 10 to 15% of POS, and 30 to 35% of SOS. The soft CBE has a low SFC overall in a temperature range of 20 to 35°C, and thus it can provide soft-texture chocolate but does not form solid crystals at room temperature, which may cause a blooming phenomenon.

Most of the currently available CBEs are allowed to have hard or soft properties by adjusting a mixed ratio between SOS obtained through synthesis or fractionation and PMF having a high POP content. However, the CBEs do not exhibit an SFC curve having a steep slope, unlike natural cocoa butter.

US Patent No. 4,705,692 discloses a substitute composition for cocoa butter which includes SOS, POS, and POP and has a high SOS content, in which the ratio of stearic acid to palmitic acid is 1.5:1 to 6.0:1.

JP Patent Publication No. 1999-243982 discloses fat having a triglyceride composition with a high POS content, produced by transesterification, wherein POS content is low, 18 wt% or less, whereas POP content is high, 10 to 55 wt%, and SOS content is high, 10 to 50 wt%. In this respect, the process focuses on synthesizing SOS rather than POS.

JP Patent Publication No. 2008-154555 discloses fat and oil for chocolate having proper heat resistance and meltability in the mouth, wherein the fat and oil has an SOS content of 40 to 60 wt%, a POP content of 1 to 10 wt%, and a weight ratio of SOS content/the sum of POS and SOA contents of 1.1 to 1.8, and the SOS content is greater than the sum of the POS and SOA contents. Thus, the fat and oil includes a high SOS content.

These conventional methods focus on fat and oil for chocolate having a high SOS content in order to produce chocolate products which are soft and quickly melt in the mouth and thus do not leave an aftertaste, whereas they do not put emphasis on POS abundant in natural cocoa butter.

Thus, the inventors of the present invention have conducted extensive studies to develop a fat composition which has a triglyceride composition similar to cocoa butter, improves the quality of cocoa butter produced in a particular area, and is nutritionally excellent, thereby achieving the present invention.

### [Disclosure]

### [Technical Problem]

The present invention is aimed at providing a fat composition for chocolate and confectionery which has a POS/SOS content ratio in triglyceride of 1 to 11.

The present invention is also aimed at providing cocoa butter equivalents containing the fat composition, a cocoa butter quality enhancer, and chocolate prepared using the same.

### [Technical Solution]

In accordance with an aspect of the present invention, a fat composition having an adjusted content ratio of POS/SOS is prepared by enzymatic transesterification of vegetable fat or oil, after which the structure of triglyceride in the fat composition is analyzed to ascertain that the composition has a similar structure to natural cocoa butter. Then, the fat composition is mixed with cocoa butter, followed by analysis of the triglyceride structure and SFC of the mixture, thus ascertaining that the fat composition improves the quality of cocoa butter.

The present invention provides a fat composition for chocolate and confectionery having a POS/SOS content ratio in triglyceride of 1 to 11, which is prepared by preparing a raw material fat by mixing vegetable fat or oil with fatty acid or a fatty acid derivative; and enzymatically transesterifying the raw material fat.

In the present invention, the vegetable fat or oil, which is vegetable fat or oil or fat or oil containing a fraction thereof, may include any vegetable fat or oil generally used in the art, e.g., coconut oil, palm kernel oil, palm oil, canola oil, sun flower oil, soybean oil, cotton seed oil, rice kernel oil, corn oil, olive oil, shea fat, mango kernel fat, Borneo tallow (oil from Shorea stenoptera or Pentadema butyracea), Sal oil (Sherea robusta oil), or kokum oil (Garcinia indica oil), without being limited thereto.

In the present invention, a process of fractionating vegetable fat or oil is to obtain a POP containing fat having content difference in saturated fatty acids and unsaturated fatty acids from vegetable fat or oil raw materials and may be conducted by a method selected from among dry fractionation and solvent fractionation depending on characteristics of the vegetable fat or oil raw materials. In solvent fractionation, any solvent, e.g., hexane, acetone, methyl ethyl ketone, ethanol, or the like, may be used so long as it can dissolve raw material fat.

In the present invention, examples of the fatty acid or the fatty acid derivative may include palmitic acid, stearic acid, arachidonic acid, behenic acid, and derivatives thereof, such as palmitic acid ethyl ester, stearic acid ethyl ester, arachidonic acid ethyl ester, and behenic acid ethyl ester, palmitic acid methyl ester, stearic acid methyl ester, arachidonic acid methyl ester, and behenic acid methyl ester. Preferably, stearic acid, stearic acid ethyl ester, and stearic acid methyl ester are used, without being limited thereto. Any fatty acid and any fatty acid derivatives generally used in the art may be used.

In the present invention, the enzymatic transesterification may be used to produce symmetric triglyceride including saturated fatty acids in the sn-1,3 positions and unsaturated acid in the sn-2 position and be conducted at 30 to 60°C for 1 to 30 hours using an sn-1,3 position-specific enzyme.

Examples of the sn-1,3 positions-specific enzyme may include enzymes extracted from Rhizopus delemar, Mucor miehei, Aspergillus miger, Rhizopus arrhizus, Rhizopus niveus, Mucor javanicus, Rhizopus javenicus, Rhizopus oryzae, Thermomyces lanuginosus, or the like. Preferably, enzymes extracted from Mucor miehei or Thermomyces lanuginosus are used, without being limited thereto. Any enzyme specific to the sn-1 and 3 positions used in the art may be used.

In the present invention, the ratio of substrates to reaction time may be adjusted in the enzymatic transesterification to adjust a POS/SOS content ratio. Further, when the reaction is completed, reactants may be mixed with each other to facilitate use change, thereby adjusting a POS/SOS content ratio. For example, a composition including 48% of POS and 13% of SOS and having a POS/SOS content ratio of 3.7 is mixed with a composition including 40% of POS and 40% of SOS and having a POS/SOS content ratio of 1 at a weight ratio of 7:3, thereby producing a composition that includes 45% of POS and 21 % of SOS and has a POS/SOS content ratio of 2.

Fat prepared using the above initial raw materials and process has a triglyceride composition having a POS/SOS ratio of about 1 to 11. In the enzymatic transesterification, a ratio of substrates and reaction time are adjusted or reactants are mixed, thereby making it possible to adjust a POS/SOS ratio and selectively producing a composition having a POS/SOS ratio of about 1 to 11 as needed.

### [Advantageous Effects]

As described above, a fat composition according to the present invention has an SFC curve with a steep slope specific to cocoa butter due to a triglyceride composition with a high POS content similar to that of natural cocoa butter. Thus, the fat composition may be used as a cocoa butter equivalent that pleasantly melts in the mouth and has soft texture. Also, the fat composition may be used to enhance the quality of cocoa butter. The fat composition is added to solid cocoa butter, thereby achieving the composition and physical properties of triglyceride similar to those of cocoa butter having a soft texture.

### [Description of Drawings]

Fig. 1 is a high-performance liquid chromatography (HPLC) graph depicting a triglyceride composition of a fat composition according to the present invention; and
Fig. 2 is a graph depicting SFC of cocoa butter including the fat composition according to the present invention and SFC of natural cocoa butter having different physical properties.

### [Mode for Invention]

Next, the present invention will be described in more detail with reference to the following examples. These examples are provided for illustrative purposes only and are not to be in any way construed as limiting the present invention.

### Example 1: Preparation of fat composition and analysis of structure of triglyceride

In Example 1, a fat composition was prepared as follows. A palm fraction was obtained as a raw material fat through solvent fractionation. 1 kg of palm oil was completely dissolved at 60°C and mixed with 10 kg of acetone. After the container was closed with a stopper, the mixture was stirred so that the oil was thoroughly dissolved in the acetone. The mixed solution was stirred at 0°C and 30 rpm for 3 hours and then crystallized, followed by vacuum filtration, thereby separating into palm stearin in a solid state and palm olein in a liquid state. Here, the palm olein had a yield of 60% or more and an iodine value of 60 or less.

The acetone-unremoved palm stearin obtained through fractionation was completely dissolved at 40°C and mixed with additional acetone. The mixture was stirred at 30°C and 30 rpm and then crystallized, followed by vacuum filtration, thereby separating into a crystallized fraction and a palm middle fraction (PMF). Here, the PMF had a yield of 30% or more, and the palm fraction contained 55% of POP and had an iodine value of 40.

The palm fraction was mixed with stearic acid or a stearic derivative at a molar ratio of 1:2 such that the total weight was 2 kg, after which the mixture was subjected to transesterification using immobilized sn-1,3-specific lipase, lipozyme RM IM, obtained from Rhizomucor miehei for 1, 2, 3, 4, 5, 6, 10, 14, and 20 hours, thereby synthesizing fat compositions. Then, ethyl ester present in the synthesized fats was evaporated to produce final fat compositions.

The kind and content of triglyceride in the fat compositions before/after the enzymatic transesterification were identified using HPLC.

Analysis of triglyceride was conducted using HPLC under conditions listed in Table 1. The triglyceride structure of the fats before and after fractionation was analyzed using reverse-phase high-performance liquid chromatography and an evaporative light scattering detector (ELSD). 30 µl of a specimen and 10 ml of hexane were filtered using a PEFE syringe filter (25 mm, 0.2 µm) and then put in a 2 ml vial, and 20 µl of the specimen was injected using an autosampler. Acetonitrile and hexane/isopropyl alcohol were used as a solvent A and a solvent B, respectively, and a flow rate was 1 ml/min. Solvent gradient elution (A:B, v:v) was conducted for 70 minutes, which was performed at 80:20 for 45 minutes, at 54:46 up to 60 minutes, and then at 80:20 from 60 minutes to 70 minutes.

**TABLE 1**

| | |
|---|---|
| Equipment | Agilent, 1200 HPLC Chemstation |
| Column | NOVA-pack C18 60 Å 4 µm (3.9 x 150 mm, Waters) |
| Detector | Alltech, Evaporative Light Scattering Detector (ELSD) |
| Sample amount | 20 µl |
| Solvent | Acetonitrile:hexane/isopropyl alcohol Gradient solvent system |
| Detector gain | 1 |
| Detector oven temperature | 80°C |
| Carrier gas | N₂ (1.5 L/min) |

The triglyceride composition of each fat was identified through HPLC, and results are illustrated in Table 2.

**TABLE 2**

| Reaction time | POP | POS | SOS | POS/SOS |
|---|---|---|---|---|
| 0 H | 89.23 | 7.57 | 0.00 | |
| 1 H | 76.89 | 17.57 | 1.61 | 10.91 |
| 2H | 68.10 | 25.14 | 3.09 | 8.14 |
| 3H | 58.69 | 30.76 | 5.03 | 6.12 |
| 4H | 52.54 | 35.23 | 6.60 | 5.34 |
| 5 H | 43.79 | 40.61 | 9.62 | 4.22 |
| 6H | 40.53 | 42.85 | 10.72 | 4.00 |
| 10 H | 33.38 | 48.31 | 13.21 | 3.66 |
| 14 H | 20.21 | 43.51 | 30.55 | 1.42 |
| 20 H | 13.36 | 40.12 | 40.93 | 0.98 |

As shown in Table 2, a fat composition having a POS/SOS content ratio of about 1:1 has a triglyceride composition including 40.12% of POS and 40.93% of SOS, having a POS/SOS ratio of 0.98. A fat composition having a POS/SOS content ratio of less than 11 has a triglyceride composition including 17.57% of POS and 1.61% of SOS, having a POS/SOS ratio of 10.91. As such, fat compositions having a POS/SOS content ratio of 1 to 11 were prepared in the present invention.

### Example 2: Preparation of mixed fat composition

0.4 kg of a mixed fat composition having a POS/SOS content ratio of 3 was prepared by mixing 10 w/w% of the fat composition having a POS/SOS content ratio of 1.42 obtained by transesterification for 14 hours in Example 1 with 90 w/w% of the fat composition having a POS/SOS content ratio of 4 obtained by transesterification for 6 hours in Example 1.

### Example 3: Preparation of cocoa butter mixture

0.4 kg of the mixed fat composition prepared in Example 2 and 1.6 kg of natural cocoa butter were stirred and mixed at 60°C, thereby preparing a cocoa butter mixture.

### Experimental Example 1: Analysis of triglyceride structure of cocoa butter mixture

To evaluate whether the fat compositions according to the present invention can be used to improve the quality of cocoa butter, a mixture of the mixed fat composition prepared in Example 2 and a cocoa butter having solid texture, cocoa butter having solid texture, and cocoa butter having soft texture were analyzed as to the kind and content of triglyceride in fat using HPLC.

Analysis of triglyceride was conducted using HPLC under conditions listed in Table 3. The triglyceride structure of the fats before and after fractionation was analyzed using reverse-phase high-performance liquid chromatography and an evaporative light scattering detector (ELSD). 30 µl of a specimen and 10 ml of hexane were filtered using a PEFE syringe filter (25 mm, 0.2 µm) and then put in a 2 ml vial, and 20 µl of the specimen was injected using an autosampler. Acetonitrile and hexane/isopropyl alcohol were used as a solvent A and a solvent B, respectively, and a flow rate was 1 ml/min. Solvent gradient elution (A:B, v:v) was conducted for 70 minutes, which was performed at 80:20 for 45 minutes, at 54:46 up to 60 minutes, and then at 80:20 from 60 minutes to 70 minutes.

**TABLE 3**

| | |
|---|---|
| Equipment | Agilent, 1200 HPLC Chemstation |
| Column | NOVA-pack C18 60 Å 4 µm (3.9 x 150 mm, Waters) |
| Detector | Alltech, Evaporative Light Scattering Detector (ELSD) |
| Sample amount | 20 µl |
| Solvent | Acetonitrile:hexane/isopropyl alcohol Gradient solvent system |
| Detector gain | 1 |
| Detector oven temperature | 80°C |
| Carrier gas | N₂ (1.5 L/min) |

The triglyceride composition of each fat was identified through HPLC, and results are illustrated in Table 4.

**TABLE 4**

| | CB having solid texture | CB having solid texture + composition of the present invention | CB having soft texture |
|---|---|---|---|
| POP | 12.6 | 18.2 | 14.1 |
| POS | 46.9 | 46.1 | 45.4 |
| SOS | 29.8 | 25.9 | 24.8 |

As shown in Table 4, when the cocoa butter having a solid texture is mixed with the fat composition of the present invention, POS content decreases from 46.9% to 46.1 %, similar to a POS content of the cocoa butter having soft texture of 45.4%. Further, SOS content decreases from 29.8% to 25.9%, similar to the SOS content of the cocoa butter having soft texture of 24.8%. That is, it is identified that the fat composition of the present invention can reduce the SOS content of particular cocoa butter having a high SOS content while maintaining POS content in a similar level.

### Experimental Example 2: Analysis of SFC using nuclear magnetic resonance (NMR)

The cocoa butter mixture prepared in Example 3 and natural cocoa butter were analyzed as to SFC using nuclear magnetic resonance (NMR). SFC analysis was conducted using NMR under conditions listed in Table 5.

An SFC analysis test using NMR was conducted by a parallel method. Five 3-ml samples were prepared and sufficiently melted at 80°C in pre-treatment, followed by cooling at 60°C for 10 minutes and then at 0°C for 90 minutes. Then, the crystals were stabilized at 26°C for 40 hours and then cooled at 0°C for 90 minutes. The samples were left for 30 minutes in a Celsius bath with a metal block thermostat preset to 10.0°C, 20.0°C, 25.0°C, 30.0°C, and 35.0°C, respectively, followed by SFC measurement. SFC was measured for about 6 seconds.

**TABLE 5**

| | |
|---|---|
| NMR equipment | BRUKER, minispec |
| Frequency | 60 MHz |
| Sample amount | 3 ml |
| Pre-treatment temperature | 100 metal block thermostat, 0°C |
| Experiment temperature | 10.0°C, 20.0°C, 25.0°C, 30.0°C, 35.0°C |

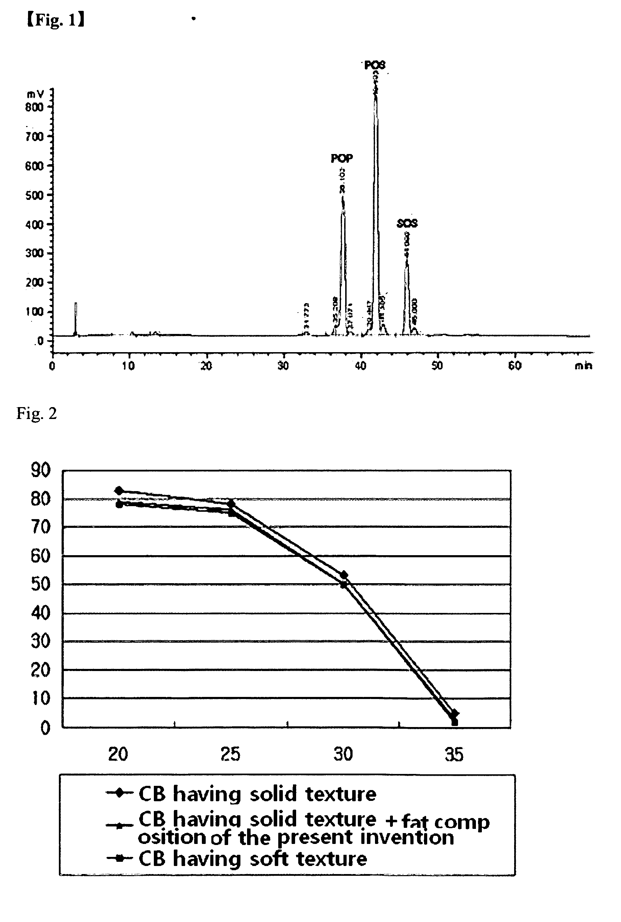

Analysis results of SFC using NMR are illustrated in Fig. 2. As shown in Fig. 2, the SFC of cocoa butter having solid texture is high overall at each temperature. The mixture of the cocoa butter having a solid texture with the fat composition of the present invention has SFC and slope similar to cocoa butter having soft texture. That is, the fat composition of the present invention is added to natural cocoa butter having solid properties to adjust physical properties of the cocoa butter similarly to those of cocoa butter having soft texture, thereby improving the quality of the cocoa butter.

### Example 3: Evaluation of properties of chocolate

In order to ascertain characteristics of chocolate containing the fat composition of the present invention, the chocolate containing the fat composition of the present invention, chocolate containing common CBE, and chocolate containing CB were prepared and evaluated as to properties.

### 3-1: Preparation of chocolate

As the fat composition of the present invention, fat compositions having a POS/SOS content ratio of 1, 5, and 11 were used. For comparison, common CBE having a higher SOS content than POS content and natural cocoa butter were used. Compositions of chocolates are listed in Table 6.

**TABLE 6**

| Raw materials | Chocolate 1 | Chocolate 2 | Chocolate 3 | Chocolate 4 | Chocolate 5 |
|---|---|---|---|---|---|
| Sugar (%) | 41.40 | 41.40 | 41.40 | 41.40 | 41.40 |
| Whole milk powder (%) | 15.00 | 15.00 | 15.00 | 15.00 | 15.00 |
| Skimmed milk powder (%) | 4.00 | 4.00 | 4.00 | 4.00 | 4.00 |
| Cocoa butter (%) | 19.50 | 19.50 | 19.50 | 19.50 | 20.00 |
| Cocoa butter equivalent (%) (POS/SOS content ratio: 1) | 5.00 | - | - | - | - |
| Cocoa butter equivalent (%) (POS/SOS content ratio: 5) | - | 5.00 | - | - | - |
| Cocoa butter equivalent (%) (POS/SOS content ratio: 11) | - | - | 5.00 | - | - |
| Common CBE(%) | - | - | - | 5.00 | - |
| Cocoa mass (%) | 14.50 | 14.50 | 14.50 | 14.50 | 14.50 |
| Lecithin (%) | 0.50 | 0.50 | 0.50 | 0.50 | 0.50 |
| Emulsifier (%) | 0.08 | 0.08 | 0.08 | 0.08 | 0.08 |
| Vanilla flavor (%) | 0.05 | 0.05 | 0.05 | 0.05 | 0.05 |

Raw materials were mixed according to compositions listed in Table 6 and formed into fine particles using a ball mill at 60°C and 500 rpm for 2 hours, after which the mixture was cooled to 50°C, placed in a stainless container, and subjected to tempering. The tempered chocolate was put in a mold and cooled in a refrigerator at 10°C, thereby completing chocolate.

### 3-2: Evaluation of properties

The five chocolates prepared above were evaluated as to properties. Texture, mouth feel, flavor release, and total feeling are indicated by from 1 to 10. Results of the evaluation are illustrated in Table 7.

**TABLE 7**

| | Texture | Mouth feel | Flavor release | Total feeling |
|---|---|---|---|---|
| Chocolate 1 | 7.2 | 8.0 | 7.8 | 8.0 |
| Chocolate 2 | 7.4 | 8.1 | 7.9 | 8.1 |
| Chocolate 3 | 7.1 | 7.9 | 7.8 | 7.8 |
| Chocolate 4 | 6.9 | 7.7 | 7.7 | 7.4 |
| Chocolate 5 | 7.1 | 8.0 | 7.9 | 8.0 |

As a result of the evaluation, the chocolates 1, 2, and 3 containing the fat compositions of the present invention obtain a higher grade than the chocolate 4 containing the common CBE and have a similar level to the chocolate 5 containing natural cocoa butter only in terms of texture, mouth feel, and flavor release. Thus, the fat compositions of the present invention can replace expensive natural cocoa butter.

Further, as to total feeling, the chocolates 1, 2, and 3 containing the fat compositions of the present invention obtain a higher grade than the common CBE having a high SOS content, thus proving that the fat compositions of the present invention having a high POS content exhibit excellent quality.

## Claims

1. A fat composition for chocolate and confectionery having a POS/SOS content ratio in triglyceride of 1 to 11.

2. The fat composition according to claim 1, wherein the composition is prepared by preparing a raw material fat by mixing vegetable fat with fatty acid or a fatty acid derivative and enzymatically transesterifying the raw material fat.

3. The fat composition according to claim 2, wherein the vegetable fat comprises at least one selected from the group consisting of palm kernel oil, palm oil, sunflower oil, and fractions thereof.

4. The fat composition according to claim 2, wherein the fatty acid or the fatty acid derivative comprises at least one selected from the group consisting of palmitic acid, stearic acid, and derivatives thereof, such as palmitic acid ethyl ester, stearic acid ethyl ester, palmitic acid methyl ester, and stearic acid methyl ester.

5. A cocoa butter equivalent comprising the fat composition according to claim 1.

6. Chocolate prepared using the fat composition according to claim 1.
